# EUROPÄISCHE PATENTSCHRIFT

(11) **EP 2 499 388 B1**
(45) Veröffentlichungstag und Bekanntmachung des Hinweises auf die Patenterteilung: **18.10.2017**
(21) Anmeldenummer: 10778623.8
(22) Anmeldetag: 09.11.2010
(51) Int. Cl.: F16D 1/116, F16H 57/00, F16B 21/18

(54) **System umfassend eine Lenkhilfepumpe, eine Antriebswelle und eine Vorrichtung zum Koppeln der Antriebswelle mit der Lenkhilfepumpe und Verfahren zur Herstellung dieses Systems**
system comprising a power steering pump, a drive shaft and a device for coupling said drive shaft with the power steering pump and method for producing said system
système comprenant une pompe de direction assistée, un arbre d'entraînement et un dispositif d'accouplement de l'arbre d'entraînement avec la pompe de direction assistée et procédé de production de ce système

(30) Priorität: 11.11.2009 DE 102009052791
(43) Veröffentlichungstag der Anmeldung: 19.09.2012
(73) Patentinhaber: KNORR-BREMSE Systeme für Nutzfahrzeuge GmbH, 80809 München (DE)
(72) Erfinder: HEBRARD, Gilles, F-14000 Caen (FR)
(74) Vertreter: Mattusch, Gundula
(86) Internationale Anmeldenummer: PCT/EP2010/067094
(87) Internationale Veröffentlichungsnummer: WO 2011/058000

(56) Entgegenhaltungen:
- EP-A1- 1 741 959
- DE-C- 356 796
- DE-U1-202008 010 947
- US-A- 3 750 489

## Beschreibung

Die Erfindung betrifft ein System mit einer Lenkhilfepumpe, einer Antriebswelle und einer Vorrichtung zum Koppeln der Antriebswelle mit der Lenkhilfepumpe.

Die Erfindung betrifft weiterhin ein Verfahren zur Herstellung eines solchen Systems.

An das Antriebsaggregat eines Fahrzeugs, insbesondere eines Nutzfahrzeugs, werden mittlerweile zahlreiche weitere Nebenaggregate angeschlossen, die von dem Antriebsaggregat angetrieben werden müssen und deren Betrieb für die Funktionsfähigkeit des Fahrzeugs notwendig ist. Aufgrund des beschränkten Raumes in unmittelbarer Umgebung des Antriebsaggregates müssen dabei zunehmend komplexere Mechaniken die von dem Antriebsaggregat bereitgestellten Antriebskräfte auf die einzelnen Nebenaggregate übertragen. Hierzu werden insbesondere Rädertriebe eingesetzt und teilweise mehrere Nebenaggregate nach dem Prinzip einer Reihenschaltung hintereinander angetrieben. Die Reihenfolge von zum Antrieb in Reihe geschalteter Nebenaggregate kann sich beispielsweise aus der zum Antrieb eines Nebenaggregates notwendigen Antriebsenergie ergeben, wobei Nebenaggregate, die eine höhere Antriebsleistung benötigen üblicherweise dichterer an dem Antriebsaggregat des Fahrzeugs angeordnet werden. Beispielsweise wird ein zur Versorgung einer druckluftbetriebenen Bremsanlage eines Nutzfahrzeugs vorgesehener Druckluftkompressor direkt über einen Rädertrieb von dem Antriebsaggregat angetrieben, während eine Lenkhilfepumpe beispielsweise indirekt über eine Verlängerung der Welle des Druckluftkompressors von dem Antriebsaggregat angetrieben sein kann.

Um Energie beim Betrieb des Fahrzeugs einzusparen, ist es vorteilhaft, Energie verbrauchende Nebenaggregate nach Möglichkeit nicht dauernd zu betreiben. Insbesondere ein Druckluftkompressor kann zeitweise außer Betrieb genommen werden, so lange eine ausreichende Druckluftmenge zum Betrieb der Bremsanlage innerhalb des Fahrzeugs gespeichert ist. Zu diesem Zweck ist bekannt, eine Kupplung zwischen dem Antriebsaggregat und dem Druckluftkompressor vorzusehen, um den Druckluftkompressor zeitweilig stillzulegen. Dabei ist darauf zu achten, dass das über dem Druckluftkompressor angetriebene Nebenaggregat, zum Beispiel die Lenkhilfepumpe nicht zusammen mit dem Druckluftkompressor über die Kupplung stillgelegt wird. Dies kann beispielsweise über einen entsprechend ausgelegten mechanischen Nebenabtrieb realisiert werden, der ein entsprechendes Drehmoment vor der Kupplung entnimmt und an den beispielsweise die Lenkhilfepumpe anschließbar ist.

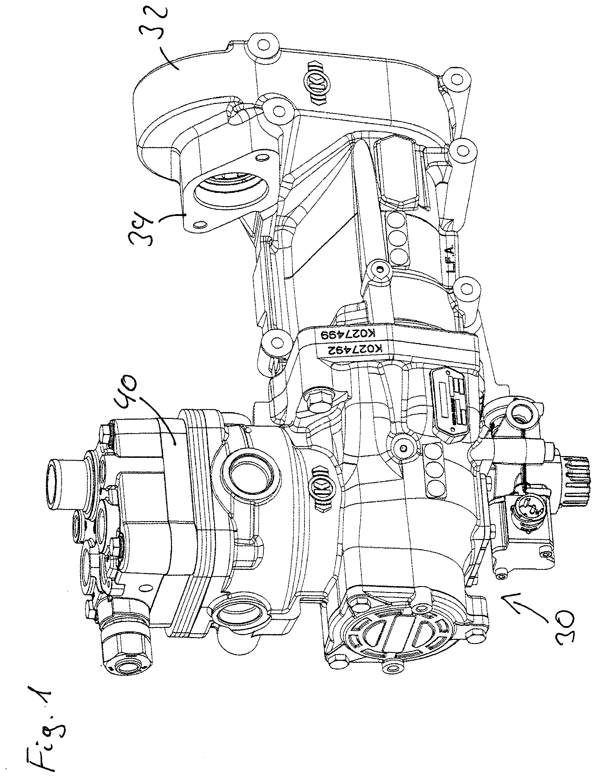

Figur 1 zeigt einen Druckluftkompressor mit einem Anschlussflansch für ein nachgeordnetes Nebenaggregat. Der dargestellte Druckluftkompressor 30 verfügt über einen im Inneren eines Gehäuses 32 angeordneten Rädertrieb, an den über den Anschlussflansch 34 ein weiteres Nebenaggregat, zum Beispiel eine Lenkhilfepumpe, koppelbar ist. Das nicht dargestellte Nebenaggregat ist zwischen dem Anschlussflansch 34 und einem Zylinderkopf 40 des Druckluftkompressors 30 nach der Montage des Druckluftkompressors 30 an dem Antriebsaggregat des Fahrzeugs nachträglich montierbar. Um eine Welle, an die das nicht dargestellte Nebenaggregat angeschlossen wird, bis zur Montage des Nebenaggregates vor dem Herausfallen aus dem Rädertrieb zu schützen, muss eine entsprechende Verliersicherung vorgesehen sein.

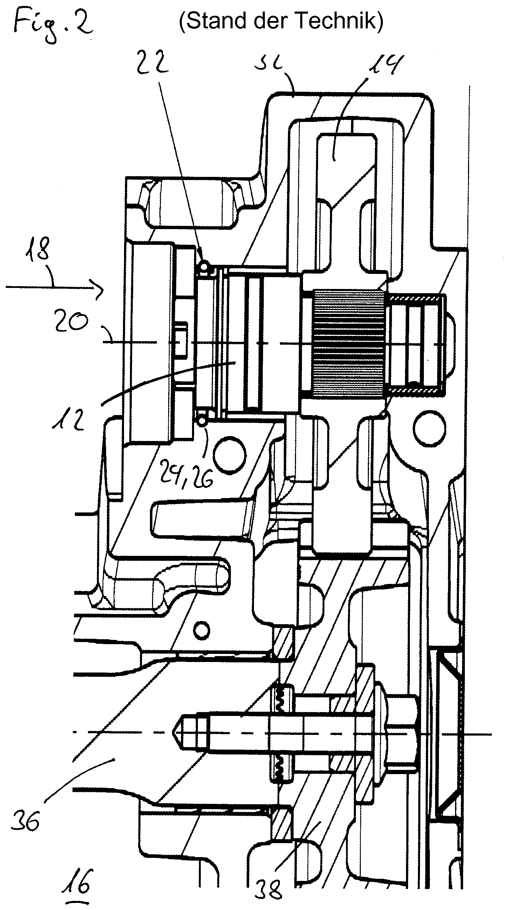

Figur 2 zeigt einen Rädertrieb mit zugehöriger Welle gemäß dem Stand der Technik. Der in Figur 2 dargestellte Rädertrieb 16 ist auf der rechten Seite im Inneren des in Figur 1 dargestellten Gehäuses 32 angeordnet. Über eine Antriebswelle 36 wird Antriebsenergie in Form von Drehmoment in den Rädertrieb 16 eingebracht und auf ein Antriebsrad 38, das als ein Zahnrad ausgeführt sein kann, übertragen. Das Antriebsrad 38 ist mit einem Abtriebsrad 14 gekoppelt, welches ebenfalls als Zahnrad ausgeführt sein kann und die aufgenommene Antriebskraft auf eine Welle 12 überträgt, an die das nicht dargestellte Nebenaggregat anschließbar ist. Die Welle 12 ist um eine Drehachse 20 drehbar gelagert und wird bei der Montage in einer axialen Richtung 18 in den Rädertrieb 16 eingeschoben. Um eine Verliersicherung der Welle 12 bei nicht montiertem Nebenaggregat zu realisieren, das heißt insbesondere während des Transports, ist ein Sicherungsring 22 vorgesehen, der in einer Nut 24 an dem Gehäuse 32 montiert wird und nach der Montage der Welle 12 diese mit Hilfe einer Nut 26, die an der Welle 12 selbst angeordnet ist, in der axialen Richtung 18 fixiert. Nachteilig ist dabei insbesondere die zum Anbringen des Sicherungsringes und der Nuten 24, 26 notwendige zusätzliche Baulänge des Gehäuses 32 und der Welle 12.

Die EP 1 741 959 A1 beschreibt eine Welle und ein an der Welle über eine Verzahnung fixierbares Zahnrad, wobei ein Sicherungsring in einer die Verzahnung schneidenden Nut zur axialen Sicherung des zu fixierenden Zahnrades vorgesehen ist.

Es ist daher die Aufgabe der vorliegenden Erfindung, das gattungsgemäße System und das zugehörige Verfahren derart weiterzubilden, dass Kraftspitzen und Absplitterungen beim Zusammenfügen des Systems vermieden werden.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Bei der erfindungsgemäßen Vorrichtung ist vorgesehen, dass dem Sicherungsring zugeordnete Nuten an dem Abtriebsrad und an der Welle angeordnet sind. Auf diese Weise kann auf eine Nut zur Montage des Sicherungsringes an dem Gehäuse verzichtet werden, da der Sicherungsring direkt an dem Abtriebsrad montierbar ist. Die Baulänge der gesamten Vorrichtung kann daher in axialer Richtung um die frei gewordene Breite reduziert werden.

Dabei ist vorgesehen, dass die Nuten zwischen an der Welle und an dem Abtriebsrad vorgesehenen Zähnen verlaufen. Somit kann bei der Montage zunächst die Verzahnung zwischen der Welle und dem Abtriebsrad zusammengeführt werden, ohne gleichzeitig die Verliersicherung in der axialen Richtung überwinden zu müssen.

Weiterhin kann vorgesehen sein, dass die Nuten die an der Welle und an dem Abtriebsrad vorgesehenen Zähne zumindest teilweise schneiden. Dadurch, dass die Nut zur Aufnahme des Sicherungsringes die an der Welle und an dem Abtriebsrad vorgesehenen Zähne teilweise schneidet, wird die Fertigung vereinfacht, da die auf beiden Seiten der Nuten liegenden Zähne gemeinsam gefertigt werden können, bevor durch das Herstellen der Nuten die Zähne in axialer Richtung unterteilt werden.

Es ist vorgesehen, dass das Nebenaggregat eine Lenkhilfepumpe ist.

Insbesondere ist vorgesehen, dass Zahnkanten der Zähne des Abtriebsrades, die den Federring während der Montage aufweiten, abgerundet sind. Durch das Abrunden der Zahnkanten kann zum einen die Montage der Welle erleichtert werden und zum anderen die Wahrscheinlichkeit einer Beschädigung der Welle bei der Montage spürbar reduziert werden.

Das erfindungsgemäße
Verfahren zur Herstellung des Systems umfasst die folgenden Schritte:
- Fertigen einer ersten Nut zur teilweisen Aufnahme des Sicherungsringes an dem Abtriebsrad zwischen an dem Abtriebsrad angeordneten Zähnen;
- Abrunden der der ersten Nut zugewandten Zahnflanken der Zähne, die an dem Abtriebsrad angeordnet sind, um Kraftspitzen und Absplitterungen zu vermeiden;
- Fertigen einer zweiten der ersten Nut zugeordneten Nut zwischen an der Welle angeordneten Zähnen zur teilweisen Aufnahme des Sicherungsringes an der Welle;
- Abrunden der der zweiten Nut zugewandten Zahnflanken der Zähne, die an der Welle angeordnet sind, um Kraftspitzen und Absplitterungen zu vermeiden;
- Montieren des Sicherungsringes in der ersten Nut; und
- Zusammenschieben von Welle und Abtriebsrad in der axialen Richtung, wobei der Sicherungsring beim Zusammentreffen mit den an der Welle angeordneten Zähnen in einer radialen Richtung geweitet wird, bis der Sicherungsring beim weiteren Zusammenschieben die zweite an der Welle angeordnete Nut erreicht.

Dabei ist vorgesehen, dass die erste und die zweite Nut zwischen an der Welle beziehungsweise an dem Abtriebsrad angeordneten Zähnen gefertigt werden. Weiterhin kann dabei vorgesehen sein, dass bei der Fertigung der ersten und der zweiten Nut an der Welle beziehungsweise an dem Abtriebsrad angeordnete Zähne zumindest teilweise geschnitten werden.

Die Erfindung wird nun mit Bezug auf die begleitenden Zeichnungen anhand einer besonders bevorzugten Ausführungsform beispielhaft erläutert.

Es zeigen:
- Figur 1: einen Druckluftkompressor mit einem Anschlussflansch für ein nachgeordnetes Nebenaggregat;
- Figur 2: einen Rädertrieb mit zugehöriger Welle gemäß dem Stand der Technik;
- Figur 3: eine Kopplungsvorrichtung für das erfindungsgemäße System in nicht gekoppeltem Zustand und
- Figur 4: eine Kopplungsvorrichtung für das erfindungsgemäße System in gekoppeltem Zustand.

In den folgenden Zeichnungen bezeichnen gleiche Bezugszeichen gleiche oder gleichartige Teile.

Figur 1 zeigt einen Druckluftkompressor mit einem Anschlussflansch für ein nachgeordnetes Nebenaggregat und Figur 2 zeigt einen Rädertrieb mit zugehöriger Welle gemäß dem Stand der Technik. Die Figuren 1 und 2 wurden bereits beschrieben.

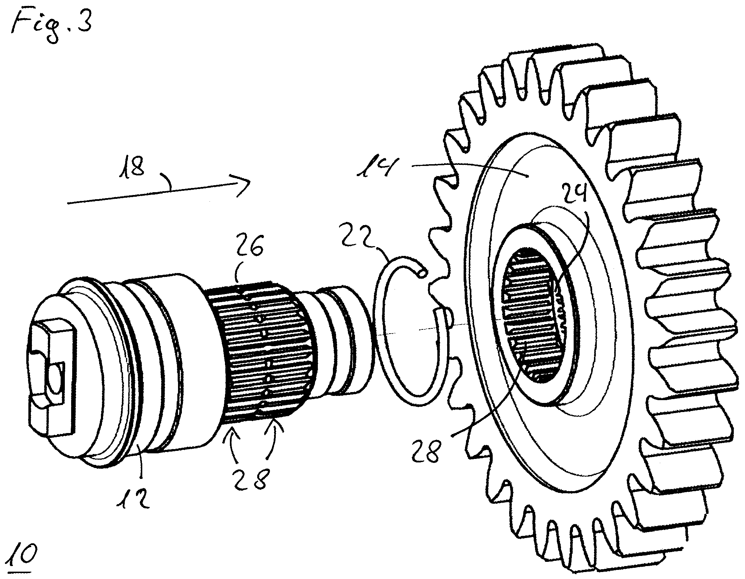

Figur 3 zeigt eine Kopplungsvorrichtung für das erfindungsgemäße System in nicht gekoppeltem Zustand. Dargestellt ist die Welle 12, das Abtriebsrad 14 und der Sicherungsring 22 in einer Explosionsdarstellung. Die dargestellten Teile werden in der axialen Richtung 18, die der Drehachse der Welle 12 entspricht, zusammengefügt. Dabei wird zunächst der Sicherungsring 22 zusammengebogen und über die inneren Zähne 28 des Abtriebsrades 14 in einer Nut 24 platziert. Anschließend wird die Welle 12 in axialer Richtung 18 in das Abtriebsrad 14 eingeschoben, wobei die an der Welle 12 vorhandenen Zähne 28 gemeinsam mit den inneren Zähnen 28 des Abtriebsrades 14 eine Verzahnung bilden. Sobald die Zähne 28 an der Welle 12 mit dem in der Nut 24 platzierten Sicherungsring 22 zusammentreffen, wird dieser in radialer Richtung geweitet, wobei die dem Sicherungsring 22 zugewandten Zahnflanken der Zähne 28 abgerundet sind, um Kraftspitzen und Absplitterungen zu vermeiden. Beim weiteren Zusammenschieben von Welle 12 und Abtriebsrad 14 in axialer Richtung 18 erreicht der Sicherungsring 22 schließlich eine Nut 26, die zwischen den Zähnen 28 auf der Welle 12 angeordnet ist.

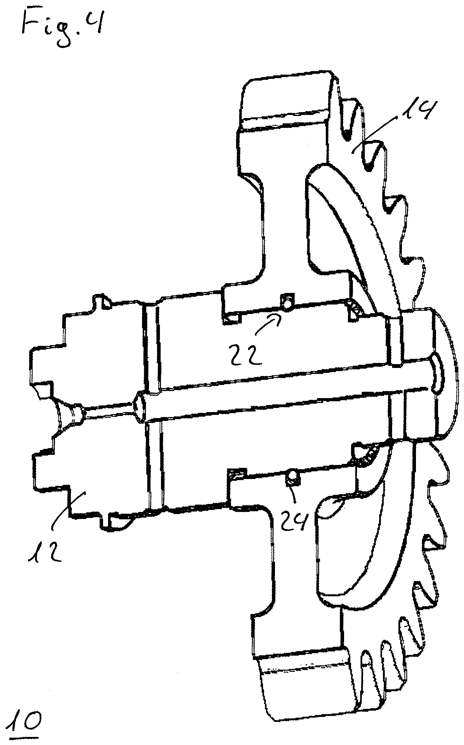

Figur 4 zeigt eine Kopplungsvorrichtung des erfindungsgemäßen Systems im gekoppelten Zustand. Dargestellt ist die aus der Figur 3 bekannte Kopplungsvorrichtung 10 im gekoppelten und geschnittenen Zustand. Der Sicherungsring 22 ruht gleichzeitig in den Nuten 24, 26, wobei die Nut 26 aufgrund des Zahnprofils auf der Welle 12 nicht sichtbar ist.

Die Anordnung der Nut 24 an dem Abtriebsrad 14 muss nicht symmetrisch zur Längenausdehnung des Abtriebsrades 14 in der Axialrichtung 18 sein. Insbesondere ist auch das Vorsehen der Nut 24 am Rand der inneren Zähne 28 in einer nicht beanspruchten alternativen Ausgestaltung denkbar.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Vorrichtung
- 12: Welle
- 14: Abtriebsrad
- 16: Rädertrieb
- 18: axiale Richtung
- 20: Drehachse
- 22: Sicherungsring
- 24: Nut
- 26: Nut
- 28: Zahn
- 30: Druckluftkompressor
- 32: Gehäuse
- 34: Anschlussflansch
- 36: Antriebswelle
- 38: Antriebsrad
- 40: Zylinderkopf

## Patentansprüche

1. System umfassend eine Lenkhilfepumpe eines Nutzfahrzeugs, eine Welle (12) zum Antrieb der Lenkhilfepumpe, einen ein Abtriebsrad (14) umfassenden Rädertrieb (16) und eine Vorrichtung (10) zum Koppeln der Welle (12)mit dem Abtriebsrad (14) , wobei die Welle (12) in einer axialen Richtung (18) parallel zu einer Drehachse (20) der Welle (12) über einen Sicherungsring (22) fixierbar ist, wobei dem Sicherungsring (22) zugeordnete Nuten (24, 26) an dem Abtriebsrad (14) und an der Welle (12) angeordnet sind, und wobei die Nuten (24, 26) zwischen an der Welle (12) und an dem Abtriebsrad (14) vorgesehenen Zähnen (28) verlaufen, wobei dem Sicherungsring (22) zugewandte Zahnflanken der Zähne (28) abgerundet sind, um Kraftspitzen und Absplitterungen zu vermeiden.

2. System nach Anspruch 1, **dadurch gekennzeichnet, dass** die Nuten (24, 26) die an der Welle (12) und an dem Abtriebsrad (14) vorgesehenen Zähne (28) zumindest teilweise schneiden.

3. Verfahren zur Herstellung eines Systems umfassend eine Lenkhilfepumpe eines Nutzfahrzeugs, eine Welle (12) und eine Vorrichtung (10) zum Koppeln der Lenkhilfepumpe mit der Welle (12) zum Antrieb der Lenkhilfepumpe gemäß einem der vorhergehenden Ansprüche, mit den folgenden Schritte:
- Fertigen einer ersten Nut (24) zur teilweisen Aufnahme des Sicherungsringes (22) an dem Abtriebsrad (14) zwischen an dem Abtriebsrad (14) angeordneten Zähnen (28);
- Abrunden der der ersten Nut (24) zugewandte Zahnflanken der Zähne (28), die an dem Abtriebsrad (14) angeordnet sind, um Kraftspitzen und Absplitterungen zu vermeiden
- Fertigen einer zweiten der ersten Nut (24) zugeordneten Nut (26) zwischen an der Welle (12) angeordneten Zähnen (28) zur teilweisen Aufnahme des Sicherungsringes (22) an der Welle (12);
- Abrunden der der zweiten Nut (26) zugewandte Zahnflanken der Zähne (28), die an der Welle (12) angeordnet sind, um Kraftspitzen und Absplitterungen zu vermeiden;
- Montieren des Sicherungsringes (22) in der ersten Nut (24); und
- Zusammenschieben von Welle (12) und Abtriebsrad (14) in der axialen Richtung (18), wobei der Sicherungsring (22) beim Zusammentreffen mit den an der Welle (12) angeordneten Zähnen (28) in einer radialen Richtung geweitet wird, bis der Sicherungsring (22) beim weiteren Zusammenschieben die zweite an der Welle (12) angeordnete Nut (26) erreicht.

4. Verfahren nach Anspruch 3, **dadurch gekennzeichnet, dass** bei der Fertigung der ersten und der zweiten Nut (24, 26) an der Welle (12) beziehungsweise an dem Abtriebsrad (14) angeordnete Zähne (28) zumindest teilweise geschnitten werden.

## Claims

1. System comprising a power steering pump of a utility vehicle, a shaft (12) for driving the power steering pump, a gear drive (16) comprising an output gear (14), and a device (10) for coupling the shaft (12) to the output gear (14), wherein the shaft (12) can be fixed in an axial direction (18) parallel to an axis of rotation (20) of the shaft (12) by way of a retaining ring (22), wherein grooves (24, 26) assigned to the retaining ring (22) are arranged on the output gear (14) and on the shaft (12), and wherein the grooves (24, 26) run between teeth (28) provided on the shaft (12) and on the output gear (14), wherein flanks of the teeth (28) facing towards the retaining ring (22) are rounded off, in order to avoid peak forces and chipping.

2. System according to claim 1, **characterised in that** the grooves (24, 26) at least partially cut the teeth (28) provided on the shaft (12) and on the output gear (14).

3. Method for producing a system comprising a power steering pump of a utility vehicle, a shaft (12) and a device (10) for coupling the power steering pump to the shaft (12) for driving the power steering pump according to one of the preceding claims, having the following steps:
- producing a first groove (24) for partially receiving the retaining ring (22) on the output gear (14) between teeth (28) arranged on the output gear (14);
- rounding off the flanks of the teeth (28) facing towards the first groove (24), which are arranged on the output gear (14), in order to avoid peak forces and chipping;
- producing a second groove (26) assigned to the first groove (24) between teeth (28) arranged on the shaft (12) for partially receiving the retaining ring (22) on the shaft (12);
- rounding off the flanks of the teeth (28) facing towards the second groove (26), which are arranged on the shaft (12), in order to avoid peak forces and chipping;
- fitting the retaining ring (22) in the first groove (24); and
- pushing the shaft (12) and the output gear (14) together in the axial direction (18), wherein the retaining ring (22) is expanded in a radial direction upon meeting with the teeth (28) arranged on the shaft (12) until, during further pushing-together, the retaining ring (22) reaches the second groove (26) arranged on the shaft (12).

4. Method according to claim 3, **characterised in that**, during the production of the first and the second groove (24, 26), teeth (28) arranged on the shaft (12) or respectively on the output gear (14) are at least partially cut.

## Revendications

1. Système comprenant une pompe de direction assistée d'un véhicule utilitaire, un arbre (12) d'entraînement de la pompe de direction assistée, un entraînement (16) de roue comprenant une roue (14) entraînée et un système (10) d'accouplement de l'arbre (12) à la roue (14) entraînée, l'arbre (12) pouvant être immobilisé dans une direction (18) axiale parallèlement à un axe (20) de rotation de l'arbre (20) par l'intermédiaire d'un jonc (22) d'arrêt, des rainures (24, 26) associées au jonc (22) d'arrêt étant ménagées sur la roue (14) entraînée et sur l'arbre (12), les rainures (24, 26) s'étendant entre des dents (28) prévues sur l'arbre (12) et sur la roue (14) entraînée, des flancs, tournés vers le jonc (22) d'arrêt, des dents (28) étant arrondis pour empêcher des pointes de force et des détachements par éclat.

2. Système suivant la revendication 1, **caractérisé en ce que** les rainures (24, 26) coupent, au moins en partie, les dents (28) prévues sur l'arbre (12) et sur la roue (14) entraînée.

3. Procédé de fabrication d'un système comprenant une pompe de direction assistée d'un véhicule utilitaire, un arbre (12) et un système (10) d'accouplement de la pompe de direction assistée à l'arbre (12) pour l'entraînement de la pompe de direction assistée suivant l'une des revendications précédentes, comprenant les stades suivants :
- production d'une première rainure (24) pour recevoir en partie le jonc (22) d'arrêt sur la roue (14) entraînée entre des dents (28) disposées sur la roue (14) entraînée ;
- arrondissement des flancs, tournés vers la première rainure (24), des dents (28), qui sont disposées sur la roue (14) entraînée pour empêcher des pointes de force et des détachements par éclat ;
- production d'une deuxième rainure (26) associée à la première rainure (24) entre des dents (28) disposées sur l'arbre (12) pour recevoir en partie le jonc (22) d'arrêt sur l'arbre (12) ;
- arrondissement des flancs, tournés vers la deuxième rainure (26), des dents (28), qui sont disposées sur l'arbre (12) pour empêcher des pointes de force et des détachements par éclat ;
- montage du jonc (22) d'arrêt dans la première rainure (24) et
- déplacement ensemble de l'arbre (12) et de la roue (14) entraînée dans la direction (18) axiale, le jonc (22) d'arrêt étant, lors de la rencontre avec les dents (28) disposées sur l'arbre (12), élargi dans une direction radiale jusqu'à ce que le jonc (22) d'arrêt atteigne, lorsque le déplacement se poursuit, la deuxième rainure (26) ménagée sur l'arbre (12).

4. Procédé suivant la revendication 3, **caractérisé en ce que**, lors de la production de la première et de la deuxième rainures (24, 26) sur l'arbre (12), on taille, au moins en partie, des dents (28) disposées sur l'arbre (12) et respectivement sur la roue (14) entraînée.
